# EUROPÄISCHE PATENTSCHRIFT

(11) **EP 1 336 784 B1**
(45) Veröffentlichungstag und Bekanntmachung des Hinweises auf die Patenterteilung: **21.06.2006**
(21) Anmeldenummer: 03002705.6
(22) Anmeldetag: 06.02.2003
(51) Int. Cl.: F16K 31/08, F16K 31/06

(54) **Bistabiles elektromagnetisches Ventil**
Bistable electromagnetic valve
Soupape électromagnétique bistable

(30) Priorität: 19.02.2002 DE 10206778; 05.07.2002 DE 10230180
(43) Veröffentlichungstag der Anmeldung: 20.08.2003
(60) Teilanmeldung: 04014215.0
(73) Patentinhaber: Schrott, Harald, 88131 Lindau (DE)
(72) Erfinder: Ott, Hubert, 88212 Ravensburg (DE)
(74) Vertreter: Eisele, Otten, Roth & Dobler

(56) Entgegenhaltungen:
- DE-A- 19 914 971
- DE-A- 19 914 972
- DE-A- 19 922 466

## Beschreibung

Die Erfindung betrifft ein bistabiles elektromagnetisches Ventil nach dem Oberbegriff des Anspruchs 1.

Derartige Ventile werden beispielsweise in Kältemittelkreisläufen verwendet, wie sie in den Druckschriften DE 37 18 490, DE 199 14 972 oder EP 10 54 200 beschrieben sind.

Bei solchen Ventilen wird eine bistabile Situation dadurch erreicht, dass Permanentmagnete außerhalb des Ventilgehäuses neben der Ventilkammer oder neben den Polschuhen angeordnet sind, so dass der Ventilkörper zwei Endpositionen an den Polschuhen besitzt, in denen er durch diese Permanentmagnete gehalten wird.

DE 199 14 972 wird als nächstliegender Stand der Technik gesehen und korrespondiert mit den Oberbegriffen der unabhängigen Ansprüchen 1 und 11.

An solche Ventile werden hohe Anforderungen im Hinblick auf die Dichtigkeit sowie Dauerstabilität gestellt. Darüber hinaus besteht wie üblich die Anforderung, ein solches Ventil möglichst kostengünstig herzustellen.

Aufgabe der Erfindung ist es dementsprechend, ein Ventil vorzuschlagen, das mit wenig Aufwand herzustellen ist und zuverlässig dicht ist.

Diese Aufgabe wird ausgehend von einem Ventil für einen Kältemittelkreislauf der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Ventil dadurch aus, dass die Ventilkammer innerhalb der Steuerspule angeordnet und die Außenwand der Ventilkammer innerhalb der Steuerspule durch einen zylindrischen Rohrkörper gebildet ist. Der Rohrkörper erstreckt sich dabei wenigstens über die in den zylindrischen Rohrkörper eingesetzten Polschuhe hinaus.

Dies bedeutet, dass im Gegensatz zu herkömmlichen Ventilen nicht die Polschuhe die Anschlüsse aufweisen, sondern diese einfach in den Rohrkörper eingelegt sind. Dichtigkeitsprobleme zwischen Rohrkörper und Polschuhe sind damit mit geringstem Aufwand vollständig unterbunden.

In einer Weiterbildung der Erfindung wird der Rohrkörper so lang ausgebildet, dass er sich wenigstens bis zu den Stirnseiten der Steuerspule erstreckt. Somit ist der Rohrkörper auch bei aufgesetzter Steuerspule gut zugänglich. Darüber hinaus kann der Rohrkörper an den Innendurchmesser der Spule angepasst sein, ohne dass Verbindungsstellen zu berücksichtigen sind.

Weiterhin können in diesem Fall Fluidanschlüsse des Ventils besonders einfach an dem außerhalb der Steuerspule zugänglichen, zylindrischen Rohrkörper angebracht werden.

Eine besonders einfache Ausbildung eines solchen Fluidanschlusses ergibt sich dadurch, dass wenigstens ein Ende des Rohrkörpers als Rohranschluss für das Fluid verwendet wird. Neben einer minimalen Anzahl von Dichtstellen bietet dies wiederum den Vorteil einer äußerst günstigen Fertigung, da der Rohranschluss im einfachsten Fall durch ein Ende des ohnehin bereits vorhandenen zylindrischen Rohrkörpers gebildet wird.

Vorzugsweise werden weitere Ventilkomponenten in den Rohrkörper eingesetzt. In Frage kommen hierbei beispielsweise die für die bistabile Funktion erforderlichen Permanentmagnete oder auch Filterelemente, um Schmutzpartikel oder ganz allgemein Verunreinigungen aus dem Fluid herauszufiltern. Grundsätzlich können jedoch auch noch weitere Ventilkomponenten ohne weiteres in den zylindrischen Rohrkörper integriert werden.

Schmutzfilter, die beispielsweise als Siebrohr oder auch als magnetisches Filterelement zur Abtrennung von magnetischen oder magnetisierbaren Partikeln ausgebildet sein können, halten Verunreinigungen vom Ventilkörper und dem Ventilsitz fern, so dass der Verschleiß dieser Komponenten wirkungsvoll reduziert wird. Hierdurch wiederum ergibt sich eine hohe Dauerstabilität des Ventils. Hierbei ist insbesondere darauf hinzuweisen, dass solche Ventile üblicherweise in geschlossenen Fluidkreisläufen eingesetzt werden, so dass die Filterkapazität nur für eine einmalige Reinigung des im Kreislauf befindlichen Fluidvolumens ausreichen muss.

Weiterhin ist es von Vorteil, wenigstens eine der genannten Ventilkomponenten an der Innenseite des Rohrkörpers wenigstens in axialer Richtung zu fixieren. Hierdurch bildet das Ventil eine in nicht angeschlossenem Zustand handhabbare Einheit, ohne dass etwaige Ventilkomponenten stirnseitig aus dem zylindrischen Rohrkörper herausfallen können.

Die axiale Fixierung lässt sich beispielsweise dadurch erreichen, dass die entsprechende Ventilkomponente im Inneren des Rohrkörpers mit diesem verpresst wird. Eine solche Verpressung lässt sich beispielsweise durch Druck von außen auf den Rohrkörper mit wenig Aufwand bewerkstelligen, wobei insbesondere in einem Arbeitsgang auch mehrere Ventilkomponenten fixiert werden können. Durch das Verpressen lässt sich darüber hinaus eine Ventilkomponente auch in radialer Richtung zuverlässig fixieren.

Für eine axiale Fixierung kann in einer einfachen Ausführungsform eine umlaufende Sicke oder eine außenseitig eingepresste Nase bereits ausreichend sein. So können beispielsweise alle Ventilkomponenten so ausgebildet werden, dass sie jeweils aneinander einen Anschlag haben, so dass die komplette, in den Rohrkörper eingeschobene Ventileinheit durch beidseitiges Anbringen einer Sicke oder einer Nase sowohl im Rohrkörper fixiert ist, als auch durch die gegenseitigen Anschläge gegen ein Verschieben untereinander gesichert ist.

In einer weiteren vorteilhaften Ausführungsform wird wenigstens auf einer Seite der Ventilkammer ein zusätzliches Innenrohr in den Rohrkörper eingeschoben. Auf diese Weise lässt sich auch ein sogenanntes 3/2-Ventil realisieren. Der Raum zwischen dem Innenrohr und dem zylindrischen Rohrkörper dient demnach als Zuflussleitung, wobei an oder in dem entsprechenden Polschuh ein Kanal zur innen liegenden Ventilkammer auszubilden ist. Im einfachsten Fall kann ein solcher Kanal durch eine umfangsseitige Ausnehmung am Polschuh gebildet werden. Das Innenrohr selbst bildet sodann einen Abfluss für das Fluid in einer Schaltstellung des Ventilkörpers. In der anderen Schaltstellung ist das gegenüberliegende Ende des Rohrkörpers als Abfluss nutzbar.

Ein Ausführungsbeispiel der Erfindung ist in der Zeichnung dargestellt und wird anhand der Figuren nachfolgend näher erläutert.

Im Einzelnen zeigen
- Fig. 1: einen Querschnitt durch ein 2/2 Wegeventil gemäß der Erfindung und
- Fig. 2: einen Querschnitt durch einen 3/2 Wegeventil gemäß der Erfindung.

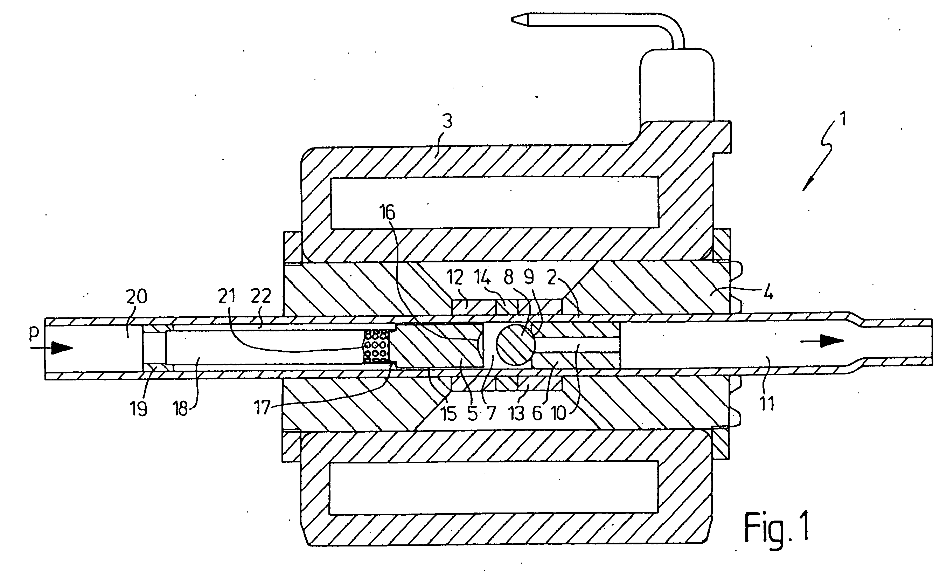

Das Ventil 1 gemäß Figur 1 umfasst einen erfindungsgemäßen zylindrischen Rohrkörper 2 als Ventilgehäuse, das eine Steuerspule 3 vollständig durchsetzt. Adapterstücke 4 sorgen hierbei für einen guten Sitz im Ventilgehäuse 2 und sind zugleich als Flussleitelemente für einen erhöhten Magnetfluss durch Polschuhe 5, 6 sowie durch eine Ventilkammer 7 ausgebildet. Im Inneren der Ventilkammer 7 befindet sich ein kugelförmiger Ventilkörper 8, der in der dargestellten Position auf dem Kugelsitz 9 des Polschuhs 6 aufliegt und dabei eine Durchgangsbohrung 10 verschließt. Die Durchgangsbohrung 10 mündet in die Abflussleitung 11 des Ventils 1.

Der Rohrkörper 2 erstreckt sich bis in den Raum außerhalb der Spule 3 und somit auch über die Polschuhe 5, 6 hinaus.

Außerhalb des Rohrkörpers 2 liegende Ringmagnete 12, 13 sorgen für das bistabile Verhalten des Ventils und sind durch einen Distanzring 14 zwischen den Adapterstücken 4 fixiert.

Der Polschuh 5 weist an seinem Außenumfang Ausnehmungen oder Abflachungen auf, durch die sich Fluidkanäle 15 zwischen dem Polschuh 5 und dem Rohrkörper 2 ins Innere der Ventilkammer 7 ergeben. Die Fluidkanäle könnten auch durch Bohrungen im Polschuh 5 realisiert werden, deren zuflussseitige Öffnungen im Ringbereich zwischen einem Rohrsieb 18 und der Innenwand des Rohrkörpers 2 liegen. Der Polschuh 5 weist weiterhin einen Kugelsitz 16 auf, um eine definiert Endlage des Ventilkörpers 8 in der zweiten, nicht dargestellten Endposition zu bewirken.

Der Polschuh 5 umfasst eine Abstufung 17, auf die das Rohrsieb 18 aufgeschoben ist. Am gegenüberliegenden Ende ist das Rohrsieb 18 in einem als Ringmagnet ausgebildeten Magnetfilter 19 fixiert. Der rohrförmige Bereich des Rohrkörpers 2 in dem sich das Rohrsieb 18 und der Magnetfilter 19 befinden, dient als Zuflussleitung 20 für das entsprechende Fluid, das heißt insbesondere für Kältemittel.

Einströmendes Fluid (siehe Pfeil P) gelangt zunächst in den Bereich des Magnetfilters 19, das als Ringmagnet ausgebildet ist und direkt mit dem Fluid in Kontakt kommt. Dadurch werden bereits am Magnetfilter 19 weit von der Ventilkammer 7 beabstandet magnetische oder magnetisierbare Schmutzpartikel dauerhaft fixiert.

Anschließend gelangt das Fluid ins Innere des Rohrsiebs 18, das stirnseitig am gegenüberliegenden Ende durch den Polschuh 5 bzw. dessen Abstufung 17 verschlossen ist. Die Fluidströmung muss im Rohrsieb 18 demnach radial nach Außen erfolgen, wobei Schmutzpartikel, die größer als die Sieböffnungen 21 des Rohrsiebs 18 sind, im Innenraum des Rohrsiebs 18 zurückgehalten werden. Somit gelangt nur gereinigtes Fluid in den Außenraum 22 zwischen Rohrsieb 18 und Rohrkörper 2. Von dort gelangt das Fluid über die Fluidkanäle 15 ins Innere der Ventilkammer 7.

Die Strömung findet natürlich nur bei geöffnetem Ventil statt, das heißt in der Schaltstellung, in der der Ventilkörper 8 auf dem Kugelsitz 16 aufliegt und die Durchgangsbohrung 10 freigegeben ist.

Ein erfindungsgemäßes Ventil 1 kann problemlos in einen Fluidkreislauf, zum Beispiel einen Kältemittelkreislauf eingebaut werden, der fertigungsbedingt Schmutzpartikel beinhaltet, die für herkömmliche Kältemittelventile nicht verträglich sind und Funktionsstörungen hervorrufen.

Die Anwendung des Ventils 1 zielt auf geschlossene Fluidkreisläufe ab, die über die Lebensdauer des Ventils 1 betrachtet nach der Fertigung geschlossen bleiben. Die Filterkapazität des Filtersystems bestehend aus Rohrfilter 18 und Magnetfilter 19 ist hierbei so auszulegen, dass eine einmalige komplette Reinigung des im Kreislauf befindlichen Fluids ohne Verstopfung folgen kann.

Auf diese Weise, das heißt durch die Verwendung eines Filters 18, 19 in der Zuflussleitung 20 des Rohrkörpers 2 und insbesondere durch die unmittelbare Anordnung neben der Ventilkammer 7 wird ein Schmutzeintrag in die Ventilkammer 7 zuverlässig soweit ausgeschlossen, dass eine dauerhaft dichte und verschleißarme Funktion des Ventils 1 gewährleistet werden kann.

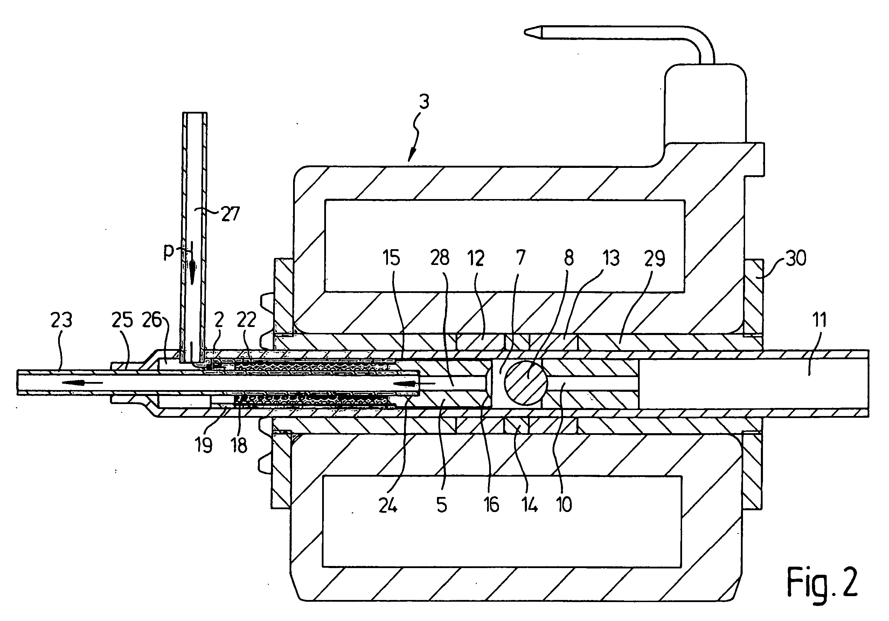

Figur 2 entspricht im Wesentlichen dem vorgenannten Ausführungsbeispiel, wobei nunmehr abweichend eine zweite, rohrförmige Abflussleitung 23 ins Innere des Rohrkörpers 2 bis zum Polschuh 5 geführt und dort in einer entsprechenden Bohrung 24 dicht fixiert ist. Der Rohrkörper 2 und die Abflussleitung 23 sind an einer Dichtstelle 25 dicht gegeneinander abgeschlossen, beispielsweise verpresst oder verlötet.

Somit ergibt sich ein Zwischenraum 26 zwischen der Abflussleitung 23 und dem Rohrkörper 2, an dem eine Zuflussleitung 27 angeschlossen ist. Die Zuflussleitung 27 kann beispielsweise in einer entsprechenden Öffnung des Rohrkörpers verlötet sein.

In dieser Ausführungsform umfasst auch der Polschuh 5 eine Durchgangsbohrung 28, die die Ventilkammer 7 über die Fluidkanäle 15 mit dem Zwischenraum 26 verbinden.

Das Fluid bzw. Kältemittel kann in Richtung des Pfeils P in den Zwischenraum 26 und von dort durch das Magnetfilter 19 in den nunmehr ringförmigen Innenraum zwischen dem Rohrsieb 18 und der Abflussleitung 23 gelangen. Anschließend strömt das Fluid radial nach Außen in den Außenraum 22 zwischen Rohrsieb 18 und Rohrkörper 2, von wo es über die Fluidkanäle 15 in die Ventilkammer 7 gelangt.

Je nach Schaltstellung des Ventilkörpers 8 fließt das Fluid dann entweder über die Abflussleitung 23 oder über die Abflussleitung 11 ab. In der dargestellten Schaltstellung ist die Durchgangsbohrung 28 des Polschuhs 5 geöffnet, das heißt der Abfluss geschieht über die Abflussleitung 23.

Durch einen Steuerpuls der Steuerspule 3 kann der Ventilkörper 8 auf den gegenüberliegenden Kugelsitz 16 gebracht werden, wodurch die Durchgangsbohrung 28 verschlossen und die Durchgangsbohrung 10 geöffnet wird. In dieser beschriebenen, jedoch nicht dargestellten Schaltstellung fließt das Fluid über die Abflussleitung 11 ab.

Anstelle der Adapterstücke 4, die im Innern der Steuerspule 3 eine konusförmige Abflussfläche aufweisen, sind vorliegend hülsenförmige Flussleitbleche 29 zur Führung des Magnetflusses im Inneren der Steuerspule 3 vorgesehen, die den Zwischenraum zwischen Rohrkörper 2 und Steuerspule 3 vollständig ausfüllen. Die Flussleitbleche 29 sind jeweils mit einer Abschlussplatte 30 verbunden, die ihrerseits mit nicht näher dargestellten, sogenannten Jochblechen verbunden ist bzw. in diese übergeht. Die Flussleitbleche 29 können gemeinsam mit der Abschlussplatte 30 und der gesamten, nicht näher dargestellten Jochblechanordnung aus einem Flachmaterial gestanzt und gebogen bzw. gewickelt werden.

### Bezugszeichenliste:

- 1: Ventil
- 2: Rohrkörper
- 3: Steuerspule
- 4: Adapterstücke
- 5: Polschuh
- 6: Polschuh
- 7: Ventilkammer
- 8: Ventilkörper
- 9: Kugelsitz
- 10: Durchgangsbohrung
- 11: Abflussleitung
- 12: Ringmagnet
- 13: Ringmagnet
- 14: Distanzring
- 15: Fluidkanal
- 16: Kugelsitz
- 17: Abstufung
- 18: Rohrsieb
- 19: Magnetfilter
- 20: Zuflussleitung
- 21: Sieböffnung
- 22: Außenraum
- 23: Abflussleitung
- 24: Bohrung
- 25: Dichtstelle
- 26: Zwischenraum
- 27: Zuflussleitung
- 28: Durchgangsbohrung
- 29: Flussleitblech
- 30: Abschlussplatte

## Patentansprüche

1. Bistabiles, elektromagnetisches Ventil (1) mit einer zwischen zwei Polschuhen (5,6) angeordneten Ventilkammer (7) und einem darin zwischen zwei Endstellungen verschiebbaren Ventilkörper (8), der als Magnetanker für wenigstens eine Permanentmagneten (12,13) und für wenigstenseine Steuerspule (3) ausgebildet ist, **dadurch gekennzeichnet, dass** die Ventilkammer (7) innerhalb der Steuerspule (3) angeordnet und die Außenwand der Ventilkammer (7) innerhalb der Steuerspule (3) durch einen zylindrischen Rohrkörper (2) gebildet ist, der sich wenigstens über die in den zylindrischen Rohrkörper (2) eingesetzten Polschuhe (5, 6) hinaus erstreckt.

2. Ventil nach Anspruch 1 **dadurch gekennzeichnet, dass** sich der Rohrkörper (2) wenigstens bis zu den Stirnseiten der Steuerspule (3) erstreckt.

3. Ventil nach einem der vorgenannten Ansprüche **dadurch gekennzeichnet, dass** die Fluidanschlüsse (11, 20) des Ventils (1) an dem zylindrischen Rohrkörper (2) angebracht sind.

4. Ventil nach einem der vorgenannten Ansprüche **dadurch gekennzeichnet, dass** wenigstens ein Ende des Rohrkörpers (2) einen Rohranschluss (11, 20) für das Fluid bildet.

5. Ventil nach einem der vorgenannten Ansprüche **dadurch gekennzeichnet, dass** Ventilkomponenten (18) in den zylindrischen Rohrkörper (2) eingesetzt sind.

6. Ventil nach einem der vorgenannten Ansprüche **dadurch gekennzeichnet, dass** ein Schmutzfilter (18) in den zylindrischen Rohrkörper (2) eingesetzt ist.

7. Ventil nach einem der vorgenannten Ansprüche **dadurch gekennzeichnet, dass** wenigstens eine Ventilkomponente (5, 6, 18) an der Innenseite des Rohrkörpers (2) wenigstens in axialer Richtung fixiert ist.

8. Ventil nach einem der vorgenannten Ansprüche **dadurch gekennzeichnet, dass** wenigstens eine Ventilkomponente (5, 6, 18) im Innern des Rohrkörpers (2) mit diesem verpresst ist.

9. Ventil nach einem der vorgenannten Ansprüche **dadurch gekennzeichnet, dass** wenigstens eine Sicke oder Nase wenigstens zur axialen Fixierung einer Ventilkomponente (5, 6, 18) in den Rohrkörper (2) eingepresst ist.

10. Ventil nach einem der vorgenannten Ansprüche **dadurch gekennzeichnet, dass** wenigstens auf einer Seite der Ventilkammer (7) ein Innenrohr (23) in den Rohrkörper (2) eingeschoben ist.

11. Verfahren zur Herstellung eines bistabilen elektromagnetischen Ventils (1) mit einer zwischen zwei Polschuhen (5,6) angeordneten Ventilkammer (7) und einem darin zwischen zwei Endstellungen verschiebbaren Ventilkörper (8), der als Magnetanker für wenigstens einen Permanentmagneten (12, 13) und für wenigstens eine Steuerspule (3) ausgebildet ist, **dadurch gekennzeichnet, dass** ein durchgehend zylindrischer Rohrkörper (2) als Außenwand der Ventilkammer (7) verwendet wird, wobei Ventilkomponenten (5, 6, 18) in den Rohrkörper (2) eingelegt werden.

12. Kälteerzeugungskreis für eine Kühlanlage, insbesondere mit mehreren Kühlräumen, einem Kompressor, einem Kondensator, mehreren Verdampfern, die wenigstens einem der Kühlräume zugeordnet sind sowie wenigstens einem elektrischen Steuerventil zur Verbindung des Kondensators mit einem oder mehreren der Verdampfern entsprechend vorbestimmten Betriebszuständen, **dadurch gekennzeichnet, dass** das Steuerventil (1) gemäß einem der vorgenannten Ansprüche ausgebildet ist.

13. Haushaltsgerät mit einem Kälteerzeugungskreis, insbesondere Kühlschrank oder Kühltruhe, **dadurch gekennzeichnet, dass** ein Kälteerzeugungskreis mit einem Ventil gemäß einem der Ansprüche 1 bis 10 vorgesehen ist.

## Claims

1. Bistable, electromagnetic valve (1) with a valve chamber (7) arranged between two pole shoes (5, 6) and a valve body (8) displaceable therein between two end positions, which is designed as a magnet armature for at least one permanent magnet (12, 13) and for at least one control coil (3), **characterised in that** the valve chamber (7) is arranged inside the control coil (3) and the outer wall of the valve chamber (7) is formed inside the control coil (3) by a cylindrical tubular body (2) which extends out at least beyond the pole shoes (5, 6) inserted in the cylindrical tubular body (2).

2. Valve according to claim 1, **characterised in that** the tubular body (2) extends at least up to the end sides of the control coil (3).

3. Valve according to one of the preceding claims, **characterised in that** the fluid connections (11, 20) of the valve (1) are attached to the cylindrical tubular body (2).

4. Valve according to one of the preceding claims, **characterised in that** at least one end of the tubular body (2) forms a tube connection (11, 20) for the fluid.

5. Valve according to one of the preceding claims, **characterised in that** valve components (18) are inserted into the cylindrical tubular body (2).

6. Valve according to one of the preceding claims, **characterised in that** a dirt filter (18) is inserted into the cylindrical tubular body (2).

7. Valve according to one of the preceding claims, **characterised in that** at least one valve component (5, 6, 18) is fixed onto the inner side of the tubular body (2) at least in axial direction

8. Valve according to one of the preceding claims, **characterised in that** at least one valve component (5, 6, 18) on the inside of the tubular body (2) is pressed moulded together with the latter.

9. Valve according to one of the preceding claims, **characterised in that** at least one bead or nose is pressed into the tubular body (2) at least for the axial securing of a valve component (5, 6, 18).

10. Valve according to one of the preceding claims, **characterised in that** at least on one side of the valve chamber (7) an inner tube (23) is pushed into the tubular body (2).

11. Method for producing a bistable, electromagnetic valve (1) with a valve chamber (7) arranged between two pole shoes (5, 6) and a valve body (8) displaceable therein between two end positions, which is designed as a magnet armature for at least one permanent magnet (12, 13) and for at least one control coil (3), **characterised in that** a continuously cylindrical tubular body (2) is used as the external wall of the valve chamber (7), whereby valve components (5, 6,18) are placed into the tubular body (2).

12. Refrigerating circuit for a refrigeration system, in particular with several refrigerating compartments, a compressor, a condenser, several evaporators, which each are allocated to one of the refrigerating compartments, as well as at least one electric control valve for connecting the condenser with one or more of the evaporators based on predetermined operating modes, **characterised in that** the control valve (1) is designed according to one of the preceding claims.

13. Household appliance with a refrigerating circuit, in particular a refrigerator or freezer, **characterised in that** the refrigerating circuit is provided with a valve according to one of claims 1 to 10.

## Revendications

1. Vanne électromagnétique bistable (1) comportant une chambre de vanne (7) agencée entre deux pièces polaires (5, 6) et un corps de vanne (8) mobile à l'intérieur entre deux positions de fin de course, lequel corps de vanne est réalisé sous la forme d'une palette mobile pour au moins un aimant permanent (12, 13) et pour au moins une bobine de commande (3),
**caractérisée en ce que** la chambre de vanne (7) est agencée à l'intérieur de la bobine de commande (3) et **en ce que** la paroi extérieure de la chambre de vanne (7) est formée à l'intérieur de la bobine de commande (3) par un corps tubulaire cylindrique (2), lequel s'étend vers l'extérieur au moins sur les pièces polaires (5, 6) insérées dans le corps tubulaire cylindrique (2) vers l'extérieur.

2. Vanne selon la revendication 1,
**caractérisée en ce que** le corps tubulaire (2) s'étend au moins jusqu'aux surfaces frontales de la bobine de commande (3).

3. Vanne selon l'une des revendications précédentes,
**caractérisée en ce que** les raccordements de fluide (11, 20) de la vanne (1) sont fixés au corps tubulaire cylindrique (2).

4. Vanne selon l'une des revendications précédentes,
**caractérisée en ce qu'**au moins une extrémité du corps tubulaire (2) forme un raccord de tube (11, 20) pour le fluide.

5. Vanne selon l'une des revendications précédentes,
**caractérisée en ce que** des composants de vanne (18) sont insérés dans le corps tubulaire cylindrique (2).

6. Vanne selon l'une des revendications précédentes,
**caractérisée en ce qu'**un filtre à saletés (18) est inséré dans le corps tubulaire cylindrique (2).

7. Vanne selon l'une des revendications précédentes,
**caractérisée en ce qu'**au moins un composant de vanne (5, 6, 18) est fixé sur la surface intérieure du corps tubulaire (2), au moins dans le sens axial.

8. Vanne selon l'une des revendications précédentes,
**caractérisée en ce qu'**au moins un composant de vanne (5, 6, 18) est pressé dans le corps tubulaire (2) avec celui-ci.

9. Vanne selon l'une des revendications précédentes,
**caractérisée en ce qu'**au moins un collet ou tenon est enfoncé dans le corps tubulaire (2) au moins pour la fixation axiale d'un composant de vanne (5, 6, 18).

10. Vanne selon l'une des revendications précédentes,
**caractérisée en ce qu'**au moins sur un côté de la chambre de vanne (7) un tube intérieur (23) est introduit dans le corps tubulaire (2).

11. Procédé pour fabriquer une vanne électromagnétique bistable (1) comportant une chambre de vanne (7) agencée entre deux pièces polaires (5, 6) et un corps de vanne (8) mobile à l'intérieur entre deux positions de fin de course, lequel corps de vanne est réalisé sous la forme d'une palette mobile pour au moins un aimant permanent (12, 13) et pour au moins une bobine de commande (3),
**caractérisé en ce qu'**un corps tubulaire entièrement cylindrique (2) est utilisé comme paroi extérieure de la chambre de vanne (7), des composants de vanne (5, 6, 18) étant insérés dans le corps tubulaire (2).

12. Circuit de production de froid pour une installation frigorifique, comprenant en particulier plusieurs chambres froides, un compresseur, un condensateur, plusieurs évaporateurs qui sont associés à au moins l'une des chambres froides, ainsi qu'au moins une vanne de commande électrique pour relier le condensateur à un ou plusieurs des évaporateurs selon les situations de fonctionnement prédéterminées,
**caractérisé en ce que** la vanne de commande (1) est réalisée selon l'une des revendications précédentes.

13. Appareil ménager comportant un circuit de production de froid, en particulier un réfrigérateur ou un congélateur,
**caractérisé en ce qu'**un circuit de production de froid est prévu avec une vanne selon l'une des revendications 1 à 10.
